# EUROPÄISCHE PATENTSCHRIFT

(11) **EP 0 982 823 B1**
(45) Veröffentlichungstag und Bekanntmachung des Hinweises auf die Patenterteilung: **21.03.2007**
(21) Anmeldenummer: 99810722.1
(22) Anmeldetag: 11.08.1999
(51) Int. Cl.: H02B 13/045

(54) **Gasisolierte Schaltanlage mit Befestigungsmitteln**
Gas-insulated switchgear with fixing means
Installation de commutation avec des moyens de fixation

(30) Priorität: 22.08.1998 DE 19838251
(43) Veröffentlichungstag der Anmeldung: 01.03.2000
(73) Patentinhaber: ABB Schweiz AG, 5400 Baden (CH)
(72) Erfinder: Hägeli, Heinz, 5436 Würenlos (CH); Vestner, Markus, 8238 Büsingen (CH); Zürcher, Martin, 8105 Watt (CH)
(74) Vertreter: ABB Patent Attorneys

(56) Entgegenhaltungen:
- DE-U- 9 414 282
- JP-A- 2 164 206

## Beschreibung

### Technisches Gebiet

Die Erfindung bezieht sich auf eine gasisolierte Schaltanlage gemäss Oberbegriff von Anspruch 1.

### Stand der Technik

Gasisolierte Schaltanlangen dieser Art werden als Leistungsschalter für hohe Spannungen eingesetzt. Sie besitzen eine Kapselung zur Aufnahme von Schaltorganen. Die Kapselung ist gasdicht und mit einem Schutzgas unter definiertem Druck gefüllt. Die Kapselung ist in der Regel auf einer Unterlage, z.B. einem Fundament, angeordnet. Die Befestigung der Kapselung auf der Unterlage muss sehr stabil ausgeführt sein um die auftretenden Kräfte aufzunehmen.

Die DE-U-94 142 82 offenbart eine derartige gasisolierte Schaltanlage.

### Darstellung der Erfindung

Es stellt sich deshalb die Aufgabe, eine Schaltanlage der eingangs genannten Art mit einer Befestigung zu versehen, die möglichst einfach aufgebaut ist und dennoch den auftretenden Kräften zu widerstehen vermag.

Diese Aufgabe wird von der Schaltanlage gemäss Anspruch 1 erfüllt.

Erfindungsgemäss wird die Kapselung also an beiden Enden von Befestigungsmitteln gehalten, wobei jedoch das eine Ende der Kapselung gegenüber der Unterlage in Längsrichtung der Kapselung verschiebbar ist. Somit werden Spannungen, die aufgrund unterschiedlicher Temperaturen in Kapselung und Unterlage auftreten, vermieden.

Vorzugsweise ist ein erstes Ende der Kapselung fest mit der Unterlage verbunden, während sich das zweite Ende in Längsrichtung bewegen kann.

Die Befestigungsmittel am verschiebbaren Ende der Kapselung können z.B. über ein stabförmiges Halteorgan, z.B. eine Schraube, mit der Unterlage verbunden sein, wobei sich dieses Halteorgan durch einen Schlitz oder ein Langloch der Befestigungsmittel erstreckt.

An einem Ende der Kapselung ist vorzugsweise ein separates Kraftaufnahmeorgan zur Aufnahme von Längs- und Querkräften vorgesehen. Dies erlaubt es, die Halteorgane zur Aufnahme von Kräften in Vertikalrichtung zu optimieren, während Längs- und Querkräfte (z.B. bei der Betätigung des Schalters oder bei Erdbeben) vom Kraftaufnahmeorgan aufgenommen werden.

Zur Vereinfachung der Montage kann das Kraftaufnahmeorgan höhentolerante Verbindungsmittel zur Verbindung mit den Befestigungsmitteln bzw. der Kapselung aufweisen. Dies erlaubt es, die Kapselung zuerst auf den Befestigungsmitteln zu nivellieren und sodann das Kraftaufnahmeorgan ohne Höhenanpassung zu befestigen. Hierzu kann das Kraftaufnahmeorgan, das Befestigungsmittel oder die Kapselung mit geeignet verlaufenden Schlitzen oder Längslöchern versehen sein, um die Verbindungsschrauben aufzunehmen.

### Kurze Beschreibung der Zeichnungen

Weitere Vorteile und Anwendungen der Erfindung ergeben sich aus den abhängigen Ansprüchen und aus der nun folgenden Beschreibung anhand der Figuren. Dabei zeigen:
Fig. 1 eine Seitenansicht einer Ausführung einer erfindungsgemässen Schaltanlage,
Fig. 2 eine Ansicht der Anlage von Fig. 1 in Richtung II,
Fig. 3 eine Ansicht der Anlage von Fig. 1 in Richtung III,
Fig. 4 ein Detailschnitt durch eine verschiebbare Stütze und
Fig. 5 eine Führungsscheibe für die Stütze nach Fig. 4.

### Weg zur Ausführung der Erfindung

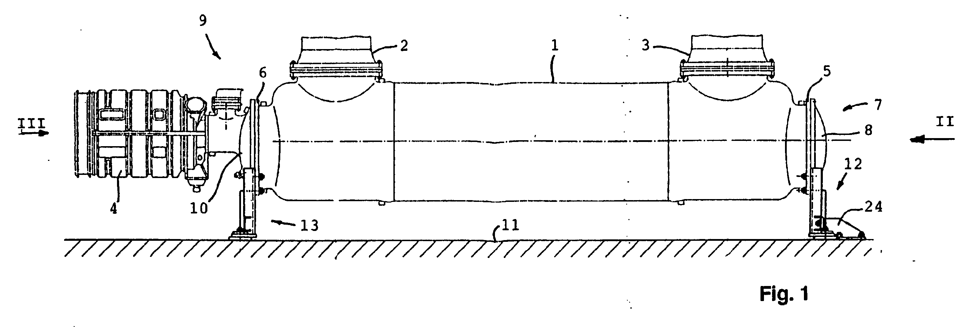

Figur 1 zeigt eine gasisolierte Schaltanlage, wie sie als Leistungschalter bei hohen Spannungen Einsatz findet. Sie besitzt eine im wesentlichen zylindrische Kapselung 1 aus Metall, welche die eigentlichen Schaltorgane umschliesst. Die Kapselung ist mit einem Schutzgas mit vorgegebenem Druck gefüllt. Der zu schaltende Strompfad erstreckt sich durch Anschlüsse 2 und 3. An einem Ende der Kapselung 1 ist ein Antrieb 4 zur Betätigung der Schaltelemente vorgesehen.

Die Kapselung 1 endet beidseitig in je einem Flansch 5, 6. An einem ersten Ende 7 der Kapselung 1 ist auf dem Flansch 5 ein Deckel 8 aufgeschraubt, an einem zweiten Ende 9 ein Anschlusselement 10 für den Antrieb 4.

Ein Fundament 11 dient als Unterlage für die Schaltanlage. Erste und zweite Befestigungsmittel 12, 13 stützen die Enden 7 bzw. 8 auf dem Fundament 11 ab.

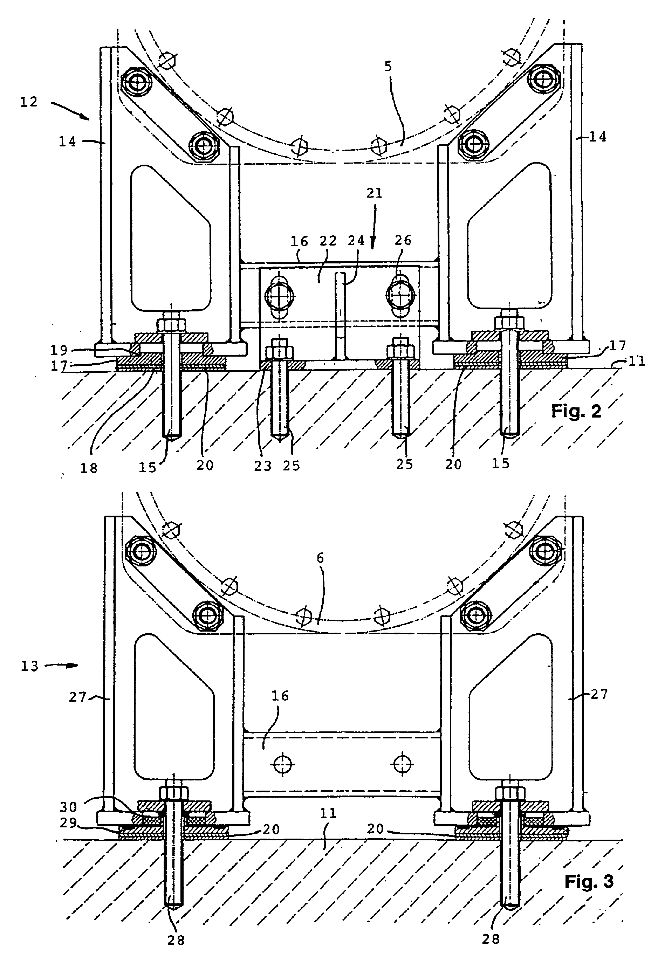

Der Aufbau der ersten Befestigungsmittel 12 ist aus Fig. 2 ersichtlich, die das erste Ende 7 der Schaltanlage zeigt. Zwei Stützen 14 sind am Flansch 5 festgeschraubt und mittels zweier Ankerschrauben 15 unverrückbar im Fundament 11 verankert. Zur Stabilisierung und zur Vereinfachung der Montage erstreckt sich zwischen den Stützen 14 ein Steg 16. Eine horizontale Verschiebung der Stützen 14 wird durch Zentrierscheiben 17 verhindert, welche ein zentrales Rundloch 18 zur Aufnahme der Ankerschrauben 15 und eine konzentrische Schulter 19 zur Halterung der Stützen 14 aufweisen. Unterlagsscheiben 20 zwischen den Zentrierscheiben 17 und dem Fundament 11 dienen zur Kompensation von Höhenunterschieden.

Zusätzlich ist ein Kraftaufnahmeorgan 21 vorgesehen, welches dazu dient, horizontale Kräfte, d.h. Längs- und Querkräfte, von der Kapselung 1 auf das Fundament 11 zu übertragen. Es besteht aus einem Metallwinkel mit einem vertikalen Schenkel 22, einer horizontalen Basisplatte 23 und einem Verstärkungssteg 24 und ist über Ankerschrauben 25 im Fundament 11 verankert. Im Schenkel 22 sind vertikal verlaufende Langlöcher 26 vorgesehen, durch welche sich Befestigungsschrauben erstrecken. Die Befestigungsschrauben bilden eine Verbindung zwischen Kraftaufnahmeorgan 21 und Steg 16. Dank der Langlöcher 26 ist die Verbindung zwischen Kraftaufnahmeorgan 21 und Steg 16 höhentolerant, d.h. die Zahl und Dicke der Unterlagsscheiben 20 kann der Ebenheit des Fundaments 11 angepasst werden, ohne dass Änderungen am Kraftaufnahmeorgan nötig werden.

Das Kraftaufnahmeorgan 21 entlastet die Stützen an beiden Enden 7, 9 der Schaltanlage und nimmt die auftretenden Horizontalkräfte auf. Dies erlaubt es, die Stützen und deren Verankerungen zur Aufnahme vertikaler Kräfte zu optimieren.

Das Kraftaufnahmeorgan 21 kann auch direkt mit dem Flansch 5 der Kapselung 1 verbunden werden.

Der Aufbau der zweiten Befestigungsmittel 13 ist aus Fig. 3 ersichtlich, die das zweite Ende 9 der Schaltanlage zeigt. Zwei Stützen 27 sind am Flansch 6 festgeschraubt und mittels zweier Ankerschrauben 28 im Fundament 11 verankert. Zwischen den Stützen 27 erstreckt sich wiederum ein Steg 16 und Unterlagsscheiben 20 dienen zur Nivellierung der Schaltanlage.

Im Gegensatz zu den Stützen 14 des ersten Endes 7 können die Stützen 27 des zweiten Endes 9 gegenüber dem Fundament 11 in Längsrichtung der Kapselung 1 verrückt werden. Hierzu werden anstelle der Zentrierscheiben 17 Gleitscheiben 29 und Führungsscheiben 30 verwendet.

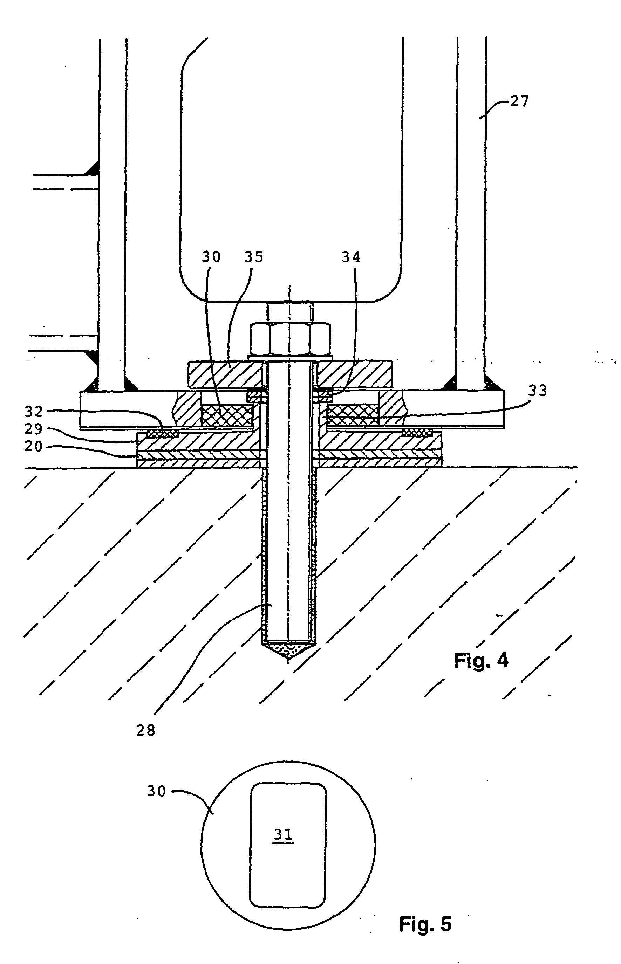

Fig. 4 zeigt vergrössert den entsprechenden Aufbau und Fig. 5 eine einzelne Führungsscheibe 30. Die Führungsscheiben 30 sind in die Füsse der Stützen 27 eingepasst und weisen je ein Langloch 31 für die Ankerschrauben 28 auf. Die Führungsscheiben 30 sind so ausgerichtet, dass sich die Langlöcher 31 in Längsrichtung der Kapselung 1 erstrecken.

Die Gleitscheiben 29 sind an ihrer Oberseite mit einem Gleitring 32 ausgestattet, der ein Gleitlager für die Stützen 27 bildet. Ausserdem besitzen sie einen Hals 33, der über Unterlagsscheiben 34, 35 den Kopf bzw. die Mutter der Verankerungsschrauben 28 abstützt, so dass die Füsse der Stützen 27 beim Festschrauben nicht geklemmt werden.

Dank der Ausgestaltung der Verankerung können sich die Stützen 27 und somit das Kapselungsende 9 also gegenüber dem Fundament 11 in Längsrichtung der Kapselung verschieben. Auf diese Weise werden Spannungen verhindert, wenn sich die Kapselung gegen das Fundament, z.B. aufgrund unterschiedlicher Temperaturverhältnisse, zusammenzieht oder ausdehnt.

### Bezugszeichenliste:

- 1:: Kapselung
- 2:: Anschluss
- 3:: Anschluss
- 4:: Antrieb
- 5:: erster Flansch der Kapselung
- 6:: zweiter Flansch der Kapselung
- 7:: erstes Ende der Kapselung
- 8:: Deckel
- 9:: zweites Ende der Kapselung
- 10:: Anschlusselement
- 11:: Fundament
- 12:: erste Befestigungsmittel
- 13:: zweite Befestigungsmittel
- 14:: Stützen der ersten Befestigungsmittel
- 15:: Ankerschrauben
- 16:: Steg
- 17:: Zentrierscheiben
- 18:: Rundloch
- 19:: Schulter
- 20:: Unterlagsscheiben
- 21:: Kraftaufnahmeorgan
- 22:: vertikaler Schenkel des Kraftaufnahmeorgans
- 23:: Basisplatte des Kraftaufnahmeorgans
- 24:: Verstärkungssteg des Kraftaufnahmeorgans
- 25:: Ankerschrauben des Kraftaufnahmeorgans
- 26:: Langlöcher des Kraftaufnahmeorgans
- 27:: Stützen der zweiten Befestigungsmittel
- 28:: Ankerschrauben
- 29:: Gleitscheiben
- 30:: Führungsscheiben
- 31:: Langloch der Führungsscheiben
- 32:: Gleitring
- 33:: Hals
- 34, 35:: Unterlagsscheiben

## Patentansprüche

1. Gasisolierte Schaltanlage mit einer Kapselung (1) zur Aufnahme von Schaltorganen, mit ersten Befestigungsmitteln (12) zur festen Befestigung eines ersten Endes (7) der Kapselung (1) auf einer Unterlage (11) und mit zweiten, in Längsrichtung der Kapselung verschiebbar ausgestalteten, Befestigungsmitteln (13) zur Befestigung eines zweiten Endes (9) der Kapselung (1) auf der Unterlage (11), **dadurch gekennzeichnet,**
- **dass** die zweiten Befestigungsmittel (13) mit mindestens einem stabförmigen, mit der Unterlage verbundenen Halteorgan (28) gehalten sind, wobei sich das Halteorgan (28) durch ein Langloch (31) oder einen Schlitz der Befestigungsmittel (13) erstreckt.

2. Schaltanlage nach Anspruch 1, **dadurch gekennzeichnet,**
- **dass** sie einen Antrieb (4) für die Schaltelemente aufweist, wobei der Antrieb (4) am zweiten Ende (9) der Kapselung (1) angeordnet ist.

3. Schaltanlage nach einem der vorangehenden Ansprüche, **dadurch gekennzeichnet,**
- **dass** im Bereich des ersten Endes (7) der Kapselung (1) ein mit der Unterlage verbundenes Kraftaufnahmeorgan (21) zur Aufnahme von Längs- und Querkräften angeordnet ist.

4. Schaltanlage nach Anspruch 3, **dadurch gekennzeichnet,**
- **dass** das Kraftaufnahmeorgan (21) höhentolerante Verbindungsmittel (26) zur Verbindung mit den ersten Befestigungsmitteln (12) und/oder der Kapselung (1) aufweist.

5. Schaltanlage nach Anspruch 4, **dadurch gekennzeichnet,**
- **dass** das Kraftaufnahmeorgan (21) oder die ersten Befestigungsmittel (12) mindestens einen, sich vertikal erstreckenden Schlitz und/oder mindestens ein sich vertikal erstreckendes Langloch (26) aufweisen zur Aufnahme mindestens einer Verbindungsschraube für das Kraftaufnahmeorgan (21).

6. Schaltanlage nach einem der Ansprüche 3 bis 5, **dadurch gekennzeichnet,**
- **dass** das Kraftaufnahmeorgan (21) als Winkel ausgestaltet ist, mit einer Basis (23) zur Befestigung an der Unterlage (11) und einem Schenkel (22) zur Befestigung an den ersten Befestigungsmitteln (12) bzw. an der Kapselung (1).

7. Schaltanlage nach einem der vorangehenden Ansprüche, **dadurch gekennzeichnet,**
- **dass** die ersten und/ oder die zweiten Befestigungsmittel (12, 13) je zwei Stützen (14, 27) aufweisen, welche an je einem endseitigen Flansch (5, 6) der Kapselung (1) befestigt sind.

8. Schaltanlage nach Anspruch 7, **dadurch gekennzeichnet,**
- **dass** die zwei Stützen (14, 27) über einen Steg (16) verbunden sind.

## Claims

1. Gas-insulated switchgear assembly having encapsulation (1) for accommodating switching members, having first mounting means (12) for securely mounting a first end (7) of the encapsulation (1) on a foundation (11), and having second mounting means (13), designed to be movable in a longitudinal direction of the encapsulation, for mounting a second end (9) of the encapsulation (1) on the foundation (11), **characterized in that**
- the second mounting means (13) are held by at least one retaining member (28) which is in the form of a rod and is connected to the foundation, in which case the retaining member (28) extends through an elongated hole (31) or a slot in the mounting means (13).

2. Switchgear assembly according to Claim 1, **characterized in that**
- said switchgear assembly has a drive (4) for the switching elements, in which case the drive (4) is arranged at the second end (9) of the encapsulation (1).

3. Switchgear assembly according to one of the preceding claims, **characterized in that**
- a force absorbing member (21) which is connected to the foundation is arranged in the region of the first end (7) of the encapsulation (1), in order to absorb longitudinal and lateral forces.

4. Switchgear assembly according to Claim 3, **characterized in that**
- the force absorbing member (21) has height-tolerant connecting means (26) for connection to the first mounting means (12) and/or to the encapsulation (1).

5. Switchgear assembly according to Claim 4, **characterized in that**
- the force absorbing member (21) or the first mounting means (12) has at least one vertically extending slot and/or at least one vertically extending elongated hole (26) for holding at least one connecting bolt for the force absorbing member (21).

6. Switchgear assembly according to one of Claims 3 to 5, **characterized in that**
- the force absorbing member (21) is designed as a bracket, having a base (23) for mounting on the foundation (11) and a limb (22) for mounting on the first mounting means (12) or on the encapsulation (1).

7. Switchgear assembly according to one of the preceding claims, **characterized in that**
- the first and/or the second mounting means (12, 13) each have two supports (14, 27), which are mounted on in each case one end flange (5, 6) of the encapsulation (1).

8. Switchgear assembly according to Claim 7, **characterized in that**
- the two supports (14, 27) are connected via a web (16).

## Revendications

1. Équipement de commutation à isolation gazeuse comprenant un étui (1) pour recevoir des éléments de commutation, comprenant des premiers moyens de fixation (12) pour la fixation en position fixe d'une première extrémité (7) de l'étui (1) sur un support (11) et comprenant des deuxièmes moyens de fixation (13) configurés de manière à pouvoir coulisser dans le sens longitudinal de l'étui et destinés à la fixation d'une deuxième extrémité (9) de l'étui (1) sur le support (11), **caractérisé en ce que** les deuxièmes moyens de fixation (13) sont maintenus par au moins un élément de maintien (28) en forme de barre relié avec le support, l'élément de maintien (28) s'étendant à travers un trou oblong (31) ou une fente des moyens de fixation (13).

2. Équipement de commutation selon la revendication 1, **caractérisé en ce qu'**il présente un mécanisme d'entraînement (4) pour les éléments de commutation, le mécanisme d'entraînement (4) étant disposé au niveau de la deuxième extrémité (9) de l'étui (1).

3. Équipement de commutation selon l'une des revendications précédentes, **caractérisé en ce que** dans la zone de la première extrémité (7) de l'étui (1) est disposé un élément d'absorption des forces (21) relié au support et destiné à absorber les forces longitudinales et transversales.

4. Équipement de commutation selon la revendication 3, **caractérisé en ce que** l'élément d'absorption des forces (21) présente des moyens de liaison (26) à tolérance de hauteur pour réaliser la liaison avec les premiers moyens de fixation (12) et/ou l'étui (1).

5. Équipement de commutation selon la revendication 4, **caractérisé en ce que** l'élément d'absorption des forces (21) ou les premiers moyens de fixation (12) présentent au moins une fente qui s'étend verticalement et/ou au moins un trou oblong (26) qui s'étend verticalement destiné à recevoir au moins une vis de liaison pour l'élément d'absorption des forces (21).

6. Équipement de commutation selon l'une des revendications 3 à 5, **caractérisé en ce que** l'élément d'absorption des forces (21) est réalisé sous la forme d'une équerre avec une base (23) pour la fixation sur le support (11) et une branche (22) pour la fixation aux premiers moyens de fixation (12) ou à l'étui (1).

7. Équipement de commutation selon l'une des revendications précédentes, **caractérisé en ce que** les premiers et/ou les deuxièmes moyens de fixation (12, 13) présentent respectivement deux montants (14, 27) qui sont fixés à chaque fois à une bride (5, 6) du côté de l'extrémité de l'étui (1).

8. Équipement de commutation selon la revendication 7, **caractérisé en ce que** les deux montants (14, 27) sont reliés par le biais d'une traverse (16).
